# EUROPÄISCHE PATENTSCHRIFT

(11) **EP 3 781 521 B1**
(45) Veröffentlichungstag und Bekanntmachung des Hinweises auf die Patenterteilung: **07.09.2022**
(21) Anmeldenummer: 19718660.4
(22) Anmeldetag: 15.04.2019
(51) Int. Cl.: C01C 1/04

(54) **AMMONIAKANLAGE MIT ANFAHROFEN UND VERFAHREN ZUR HERSTELLUNG VON AMMONIAK**
AMMONIA PLANT HAVING A START-UP FURNACE AND METHOD FOR PRODUCING AMMONIA
SYSTÈME À AMMONIAC À FOUR DE DÉMARRAGE ET PROCÉDÉ DE FABRICATION D'AMMONIAC

(30) Priorität: 16.04.2018 DE 102018108989
(43) Veröffentlichungstag der Anmeldung: 24.02.2021
(73) Patentinhaber: thyssenkrupp Industrial Solutions AG, 45143 Essen (DE); thyssenkrupp AG, 45143 Essen (DE)
(72) Erfinder: SCHAAF, Maximilian, 44141 Dortmund (DE); MEURER, Dirk, 44139 Dortmund (DE); NÖLKER, Klaus, 44265 Dortmund (DE)
(74) Vertreter: thyssenkrupp Intellectual Property GmbH
(86) Internationale Anmeldenummer: PCT/EP2019/059649
(87) Internationale Veröffentlichungsnummer: WO 2019/201847

(56) Entgegenhaltungen:
- US-A- 3 282 647
- US-A- 3 388 968
- US-A1- 2009 136 391

## Beschreibung

### Technisches Gebiet

Die vorliegende Erfindung betrifft eine Ammoniakanlage, umfassend einen ersten Reaktor für eine erste Ammoniaksynthese und einen zweiten Reaktor für eine zweite Ammoniaksynthese sowie einen Anfahrofen mit mindestens einem ersten Wärmetauscher, wobei besagter Anfahrofen über ein Rohrleitungssystem für die Reaktanden einer ersten Ammoniaksynthese mit dem ersten Reaktor verbunden ist und über ein Rohrleitungssystem für die Reaktanden einer zweiten Ammoniaksynthese mit dem zweiten Reaktor verbunden ist. Ferner betrifft die Erfindung ein Verfahren zur Herstellung von Ammoniak, insbesondere in einer derartigen Ammoniakanlage.

### Stand der Technik

Aus dem Stand der Technik sind Anfahröfen hinreichend bekannt. Diese werden benötigt, um chemischen Reaktionen eine hinreichende Aktivierungsenergie zuzuführen bzw. den Reaktionsraum auf eine geeignete Starttemperatur zu erwärmen.

In der EP 0 177 676 A2 ist beispielsweise ein Verfahren zur Sumpfphasenhydrierung mit integrierter Gasphasenhydrierung offenbart, bei welchem ein Maische-Aufheizofen als Anfahrofen verwendet wird.

In der US 7,070,750 B2 wird ein Verfahren zur Herstellung von Synthesegas für Ammoniak offenbart, wobei das stromabwärts liegende Synthesesystem bei einem höheren Druck operiert als das stromaufwärts liegende Synthesesystem.

In der EP 1 339 641 A1 wird ein Verfahren zur Herstellung von Ammoniak aus Synthesegas offenbart, wobei die Synthese von Ammoniak aus Synthesegas nacheinander in verschiedenen Synthesesystemen erfolgt. In allen Synthesesystemen wird aus jeweils einem Teil des Synthesegases Ammoniak erzeugt und davon ein Teil ausgeschleust. Jedes nachfolgende Synthesesystem weist einen höheren Druck als das jeweils vorangegangene Synthesesystem auf.

In der US 3,388,968 A wird ein kontinuierliches Verfahren zur Synthese von Ammoniak aus Synthesegas, das frisches Ammoniaksynthesegas und rückgeführtes Synthesegas enthält, offenbart.

Bei Prozessen mit verschiedenen Reaktionskammern wird regelmäßig eine entsprechende Anzahl an Anfahröfen benötigt. Insbesondere bei der Ammoniaksynthese wird für die Niederdrucksynthese ein anderer Anfahrofen eingesetzt als für die Hochdrucksynthese.

Dies verursacht Kosten und ist auch aus Umweltschutzgründen nachteilig. Allerdings konnten bisher nur so die Anforderungen der sehr unterschiedlichen Reaktoren erfüllt werden.

In der DE 696 17 878 T2 wird ein Verfahren zur Herstellung von Ammoniak beschrieben, bei dem die Anlage einen Primärreformer, einen Sekundärreformer, einen Wassergas-Shift-Konverter, eine Einrichtung zur Entfernung von Kohlenstoffdioxid und einen Methanator umfasst, wobei das aufbereitete Synthesegas dann einem Kompressor zugeführt und auf einen erhöhten Druck gebracht wird. Danach erfolgt eine Synthese in einem ersten Ammoniakkonverter, dem dann ein zweiter Reaktor nachgeschaltet ist, in dem unter Verwendung eines anderen Katalysators weiteres Ammoniak erzeugt wird. Ein Teil des Synthesegasstroms wird nach Abtrennung von Ammoniak zum Kompressor zurückgeführt. Bei diesem bekannten Verfahren arbeiten jedoch beide Ammoniakreaktoren beim gleichen Synthesedruck. Ein Vorwärmen des Synthesegases für bei unterschiedlichen Synthesedrücken arbeitende Ammoniakreaktoren in einer Anfahrphase im gleichen Anfahrofen ist bei diesem bekannten Verfahren nicht vorgesehen.

### Offenbarung der Erfindung

Aufgabe der Erfindung ist es, die vorstehend genannten Probleme zu überwinden und eine Ammoniakanlage sowie ein Verfahren zur Herstellung von Ammoniak unter Nutzung besagter Ammoniakanlage zur effizienten Reaktionsinitiierung bereitzustellen.

Die Aufgabe wird gelöst durch eine Ammoniakanlage mit den Merkmalen des Anspruchs 1.

Erfindungsgemäß ist vorgesehen, dass der Anfahrofen im Strömungsweg der Rohrleitungssysteme der beiden Reaktoren so angeordnet ist, dass er wahlweise nur mit ersten Rohrleitungen des ersten Reaktors oder nur mit zweiten Rohrleitungen des zweiten Reaktors verbindbar ist.

Gegenstand der Erfindung ist somit eine Anlage für die Synthese von Ammoniak, umfassend einen ersten Reaktor und einen zweiten Reaktor sowie einen Anfahrofen mit mindestens einem ersten Wärmetauscher, wobei der erste Reaktor, insbesondere für die Hochdrucksynthese von Ammoniak, für einen höheren internen Druck ausgelegt und eingerichtet ist als der zweite Reaktor, insbesondere für die Niederdrucksynthese von Ammoniak, wobei besagter Anfahrofen über ein Rohrleitungssystem für mindestens einen Reaktanden in Form eines Synthesegases sowohl mit dem ersten als auch mit dem zweiten Reaktor verbunden ist.

Es hat sich überraschenderweise gezeigt, dass ein und derselbe Anfahrofen genutzt werden kann, um Reaktionen in konstruktionstechnisch verschiedenen Reaktoren zu initiieren. Dementsprechend wird eine Ammoniakanlage bereitgestellt, welche ein Rohrleitungssystem umfasst, das Reaktoren, die für verschiedene Drücke ausgelegt sind, mit dem Anfahrofen verbindet, so dass die Reaktionsinitiierung in diesen Reaktoren mit nur einem Anfahrofen ermöglicht wird.

In einer geeigneten Ausgestaltung der Erfindung steht der mindestens eine erste Wärmetauscher mit dem ersten und mit dem zweiten Reaktor über das Rohrleitungssystem in Verbindung, wobei Absperrventile vorhanden sind, um zwischen dem ersten und zweiten Reaktor hin und her zu schalten.

Vorzugsweise umfasst der Anfahrofen in einer Ausgestaltung auch einen zweiten Wärmetauscher, wobei das Rohrleitungssystem über erste und zweite Rohrleitungen verfügt und wobei der erste Wärmetauscher über die erste Rohrleitung mit dem ersten Reaktor verbunden ist und der zweite Wärmetauscher über die zweite Rohrleitung mit dem zweiten Reaktor verbunden ist. In einer geeigneten Ausgestaltung ist es dabei vorgesehen, dass die erste und zweite Rohrleitungen voneinander beabstandet und voneinander getrennt sind, insbesondere nicht miteinander über weitere Rohrleitungen verbunden sind. Es hat sich überraschend gezeigt, dass beide Wärmetauscher des einen Anfahrofens zusammen erwärmt werden können, insbesondere unter Nutzung derselben Brenner.

Vorzugsweise umfasst der Anfahrofen in einer alternativen Ausgestaltung keinen zweiten Wärmetauscher, insbesondere bevorzugt nur genau einen Wärmetauscher. Ferner ist es bevorzugt, wenn durch den Anfahrofen nur eine Rohrleitung geführt wird, insbesondere die erste Rohrleitung.

Ganz besonders bevorzugt sind auch Ausgestaltungen, bei welchem das Rohrleitungssystem nur mit genau einem Anfahrofen verbunden ist.

Bei den Reaktanden im Sinne der Erfindung für die Herstellung von Ammoniak im ersten Reaktor und/oder zweiten Reaktor handelt es sich um ein Gas oder eine Gasmischung aus Stickstoff und Wasserstoff sowie gegebenenfalls auch Ammoniak und/oder unter den Reaktionsbedingungen inerten Gase wie beispielsweise Methan und/oder Argon.

In einer vorteilhaften Ausführungsform umfasst die Ammoniakanlage eine gemeinsame Quelle und/oder eine gemeinsame Zufuhrleitung für die Reaktanden des ersten und zweiten Reaktors, d.h. eine einzige Zufuhrleitung wird aufgeteilt. In einer alternativen ebenfalls bevorzugten Ausgestaltung umfasst die Industrieanlage eine erste Quelle und/oder erste Zufuhrleitung für Reaktanden des ersten Reaktors sowie eine zweite Quelle und/oder zweite Zufuhrleitung für Reaktanden des zweiten Reaktors, d.h. es gibt verschiedene Zufuhrleitungen für die Reaktanden, welche entweder am ersten Wärmetauscher zusammengeführt und wieder aufgeteilt werden oder durch verschiedene Wärmetauschern desselben einen Anfahrofens, insbesondere durch den ersten und zweiten Wärmetauscher, hindurchgeführt werden.

In einer zweckmäßigen Ausgestaltung ist der erste Wärmetauscher über die erste Rohrleitung mit dem ersten Reaktor verbunden, wobei eine dritte Rohrleitung aus der ersten Rohrleitung abzweigt, wobei der erste Wärmetauscher über die dritte Rohrleitung mit dem zweiten Reaktor verbunden ist. Vorzugsweise zweigt die dritte Rohrleitung ab, nachdem die erste Rohrleitung durch den Anfahrofen geführt wurde. Hierbei haben sich zwei Varianten als besonders vorteilhaft erwiesen. In der ersten Variante kann ein Simultanbetrieb erfolgen, wobei die dritte Rohrleitung über die erste Rohrleitung mit Reaktanden versorgt wird, d.h. eine vierte Rohrleitung, wie nachstehend für die zweite Variante beschrieben, ist nicht vorgesehen und die Quelle der Reaktanden für den ersten und zweiten Reaktor ist identisch. Bei dieser Variante ist vorzugsweise eine Drucksenkungseinrichtung in der dritten Rohrleitung vorgesehen, welche den Druck der ersten Rohrleitung vermindert. Es kann vorzugsweise eine Lochblende oder ein Ventil verwendet werden. In der zweiten Variante ist besagte Quelle nicht identisch, d.h. es gibt eine erste Quelle für Reaktanden des ersten Reaktors und eine zweite Quelle für Reaktanden des zweiten Reaktors und es ist eine vierte Rohrleitung vorgesehen, welche in die erste Rohrleitung mündet und wobei die Reaktanden durch die vierte Rohrleitung über einen Abschnitt der ersten Rohrleitung, der den ersten Wärmetauscher durchläuft, in die dritte Rohrleitung überführt werden können. Vorzugsweise sind Absperrventile der ersten Rohrleitung vorgesehen, welche den ersten Reaktor und die erste Quelle der Reaktanden von der dritten und vierten Rohrleitung trennen.

Vorzugsweise ist mindestens ein erstes Absperrventil in der ersten Rohrleitung vorhanden, um den ersten Reaktor von der dritten Rohrleitung und dem ersten Wärmetauscher zu entkoppeln, wobei mindestens ein zweites Absperrventil in der dritten Rohrleitung vorhanden ist, um die erste Rohrleitung von dem zweiten Reaktor zu entkoppeln. Insbesondere bevorzugt sind Absperrventile vorhanden, die ausgelegt und eingerichtet sind, die dritte und/oder vierte Rohrleitung von dem ersten Reaktor zu entkoppeln.

Die Erfindung betrifft ferner ein Verfahren zum Initiieren einer chemischen Reaktion in einer Industrieanlage, wie sie vorstehend beschrieben wurde, wobei das Verfahren folgende Schritte umfasst:
a. Erwärmen eines Synthesegases für eine erste Ammoniaksynthese in einem ersten Reaktor mit einem Anfahrofen und
b. Transfer des erwärmten Synthesegases zu diesem ersten Reaktor zum Zwecke der Initiierung der chemischen Reaktion;
c. Erwärmen eines Synthesegases für eine zweite Ammoniaksynthese in einem zweiten Reaktor mit dem gleichen Anfahrofen und
d. Transfer des erwärmten Synthesegases zu diesem zweiten Reaktor zum Zwecke der Initiierung der chemischen Reaktion, wobei im ersten Reaktor eine Hochdrucksynthese von Ammoniak und im zweiten Reaktor eine Niederdrucksynthese von Ammoniak bei einem Prozessdruck erfolgt, welcher niedriger ist als der Prozessdruck im ersten Reaktor.

Wenn die Begriffe Niederdrucksynthese bzw. Hochdrucksynthese in der vorliegenden Erfindung verwendet werden, dann bedeutet dies, dass die Niederdrucksynthese von Ammoniak in jedem Fall bei einem geringeren Druck erfolgt als die Hochdrucksynthese von Ammoniak. Die jeweiligen Druckbereiche, die für die Niederdrucksynthese in Betracht kommen, können in weiten Bereichen variieren und liegen insbesondere im Bereich von 50 bis 150 bar, bevorzugt in einem Bereich von etwa 70 bar bis etwa 130 bar. Beispielsweise erfolgt die Niederdrucksynthese bei etwa 120 bar. Die Hochdrucksynthese erfolgt in der Regel bei einem Druck von mindestens etwa 150 bar, die Obergrenze ist im Prinzip nicht kritisch und hängt von der Auslegung des jeweiligen Reaktors und der Leitungen ab. Beispielsweise arbeitet man bei der Hochdrucksynthese von Ammoniak in einem Bereich von etwa 150 bar bis etwa 250 bar, zum Beispiel bei etwa 220 bar.

Da es sich um ein Verfahren handelt, bei dem in zwei Reaktoren bei jeweils unterschiedlichen Prozessdrücken gearbeitet wird, muss der Kompressor im Leitungssystem so angeordnet sein, dass er das in den Rohrleitungen zum ersten Reaktor strömende Synthesegas auf einen höheren Druck bringen kann als das in den Rohrleitungen zum zweiten Reaktor strömende Synthesegas. Man kann dazu gegebenenfalls nur einen Kompressor verwenden, der dann aber über mehrere Kompressorstufen verfügt.

Nicht vorgesehen ist bei dem erfindungsgemäßen Verfahren, dass man das Synthesegas (wie im Stand der Technik) durch zwei hintereinander (in Reihe) angeordnete Ammoniakreaktoren leitet, ohne dazwischen den Druck zu erhöhen. Selbst wenn man zwischen zwei Ammoniakreaktoren einen Kompressor anordnen würde, wäre es nicht möglich, einen Anfahrofen zu verwenden, der im Strömungsweg der Rohrleitungssysteme der beiden Reaktoren so angeordnet ist, dass er wahlweise nur mit ersten Rohrleitungen des ersten Reaktors oder nur mit zweiten Rohrleitungen des zweiten Reaktors verbindbar ist.

Bei dem erfindungsgemäßen Verfahren wird der Anfahrofen nur in der Anfahrphase der Reaktion für die Vorwärmung des Synthesegases verwendet, nicht aber im laufenden Betrieb der Anlage. Das heißt, wenn die Anlage einmal vorgewärmt und hochgefahren ist, so dass sie im regulären Betrieb arbeitet, ist in der Regel eine Erwärmung in dem Anfahrofen nicht mehr vorgesehen. Der Vorteil der Erfindung liegt darin, dass man den gleichen Anfahrofen für die Erwärmung der Rohrleitungen des ersten Reaktors und des ersten Reaktors verwenden kann und wahlweise auch für die Erwärmung der Rohrleitungen des zweiten Reaktors und des zweiten Reaktors selbst. Man benötigt somit nur einen Anfahrofen und reduziert den apparativen Aufwand für die Vorwärmung der Anlage in der Anfahrphase.

In der Regel geht man so vor, dass man zunächst den Bereich für die Hochdrucksynthese der Anlage vorwärmt und die Hochdrucksynthese anfährt und man erst, wenn dieser Bereich hochgefahren ist, den Bereich für die Niederdrucksynthese vorwärmt und die Niederdrucksynthese hochfährt.

Es gibt verschiedene Varianten für die Vorgehensweise und die Anordnung der Rohrleitungen für die beiden Reaktoren. Beispielsweise kann man die Rohrleitungen für den Bereich der Niederdrucksynthese quasi parallel zu den Rohrleitungen für den Bereich der Hochdrucksynthese anordnen und dabei zwei separate Wärmetauscher verwenden, für jede Rohrleitungsschleife je einen Wärmetauscher, wobei jedoch beide Wärmetauscher in dem gleichen Anfahrofen angeordnet sind.

Alternativ dazu kann nur ein Wärmetauscher in dem Anfahrofen vorgesehen sein, wobei beide Rohrleitungsschleifen für die Hochdrucksynthese und auch für die Niederdrucksynthese wahlweise mit diesem Wärmetauscher verbindbar sein können.

Wiederum alternativ dazu kann auch nur die Rohrleitungsschleife für eines der beiden Systeme, insbesondere diejenige der Hochdrucksynthese, durch einen Wärmetauscher des Anfahrofens geführt werden und die Rohrleitung zur Niederdrucksynthese zweigt nach dem Durchströmen des Wärmetauschers von der Ausgangsleitung des Wärmetauschers zum Reaktor der Hochdrucksynthese ab. Zwar liegt dann in dieser Leitung zunächst auch der Druck der Hochdrucksynthese vor, aber man kann stromabwärts der Abzweigung einen Strömungsbegrenzer, beispielsweise in Form einer Lochblende anordnen, um so den Druck auf den für die Niederdrucksynthese vorgesehenen Druckbereich zu senken.

Der erste Reaktand und der zweite Reaktand sind jeweils ein Synthesegas für die Ammoniaksynthese, wobei im ersten Reaktor eine Hochdrucksynthese von Ammoniak und im zweiten Reaktor eine Niederdrucksynthese von Ammoniak erfolgt. Es hat sich überraschenderweise gezeigt, dass trotz der dem Fachmann geläufigen extrem unterschiedlichen Bedingungen einer Hochdrucksynthese gegenüber einer Niederdrucksynthese, derselbe Anfahrofen, wie er vorstehend beschrieben wurde, genutzt werden kann.

In einer ersten Verfahrensvariante gemäß der vorliegenden Offenbarung erfolgt der Transfer des Synthesegases zum ersten und zweiten Reaktor nacheinander, wobei ein Transfer des ersten Synthesegases durch den ersten Wärmetauscher hindurch zum ersten Reaktor erfolgt und danach ein Transfer des zweiten Synthesegases durch den ersten Wärmetauscher hindurch zum zweiten Reaktor erfolgt.

In einer zweiten Verfahrensvariante gemäß der vorliegenden Offenbarung kann der Transfer simultan oder nacheinander erfolgen, insbesondere nacheinander, wobei ein Transfer des ersten Synthesegases durch den ersten Wärmetauscher hindurch zum ersten Reaktor erfolgt und ein Anteil des ersten Synthesegases nach Erwärmung durch den ersten Wärmetauscher in den zweiten Reaktor umgeleitet wird.

In einer dritten Verfahrensvariante gemäß der vorliegenden Offenbarung kann der Transfer ebenfalls simultan oder nacheinander erfolgen, insbesondere simultan, wobei das erste Synthesegas durch den ersten Wärmetauscher hindurch in den ersten Reaktor geführt wird und das zweite Synthesegas durch den zweiten Wärmetauscher hindurch in den zweiten Reaktor geführt wird.

Vorzugsweise kann vorgesehen sein, dass der Anfahrofen Brenner aufweist, die mit demselben Gas betrieben werden, welches auch als Reformergas zur Herstellung von Wasserstoff für die Ammoniaksynthese verwendet wird, und/oder dass der Anfahrofen unter atmosphärischem Druck den ersten Wärmetauscher erwärmt.

Weitere Merkmale und Vorteile der Erfindung ergeben sich aus der nachfolgenden Beschreibung, in der Ausführungsbeispiele der Erfindung anhand von schematischen Zeichnungen beispielhaft erläutert werden, ohne dadurch die Erfindung zu beschränken.

### Kurze Beschreibung der Figuren

Dabei zeigen:
- Figur 1: eine schematische Ansicht einer ersten Ausgestaltung der Industrieanlage im Sinne der Erfindung;
- Figur 2: eine schematische Ansicht einer zweiten Ausgestaltung der Industrieanlage im Sinne der Erfindung;
- Figur 3: eine schematische Ansicht einer dritten Ausgestaltung der Industrieanlage im Sinne der Erfindung.

### Ausführungsformen der Erfindung

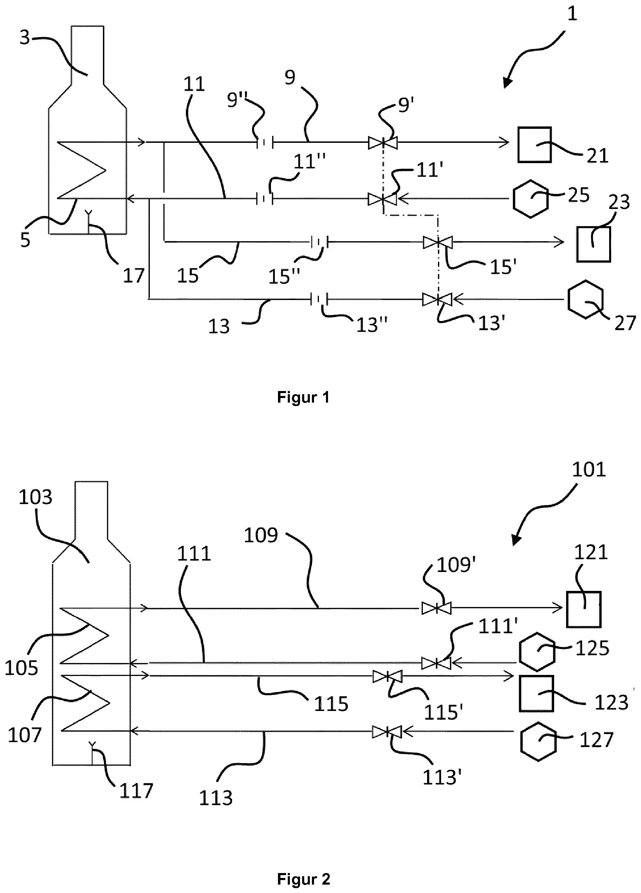

Wen in der nachfolgenden Beschreibung von "Reaktanden" die Rede ist, dann handelt es sich bei der Synthese von Ammoniak jeweils um Synthesegase, welche als Reaktanden die Gase Stickstoff und Wasserstoff enthält. Figur 1 zeigt eine erste Ausführungsform der Industrieanlage 1 umfassend einen ersten Reaktor 21 und einen zweiten Reaktor 23 sowie einen Anfahrofen 3 mit mindestens einem ersten Wärmetauscher 5, wobei der erste Reaktor 21 für einen höheren internen Druck ausgelegt und eingerichtet ist als der zweite Reaktor 23, wobei besagter Anfahrofen 3 über ein Rohrleitungssystem 9, 11, 13, 15 für mindestens einen Reaktanden sowohl mit dem ersten als auch mit dem zweiten Reaktor verbunden ist. In dieser Ausgestaltung ist der erste Wärmetauscher 5 über die erste Rohrleitung 9, 11 mit dem ersten Reaktor 21 verbunden, wobei eine dritte Rohrleitung 15 aus der ersten Rohrleitung 9 abzweigt, wobei der erste Wärmetauscher 5 über die dritte Rohrleitung 15 mit dem zweiten Reaktor 23 verbunden ist. Hierbei zweigt die dritte Rohrleitung 15 ab, nachdem die erste Rohrleitung 9 durch den Anfahrofen 3 geführt wurde. Es gibt eine erste Quelle 25 mit einer Zuführleitung 11 für Reaktanden des ersten Reaktors 21 und eine zweite Quelle 27 mit einer weiteren Zuführleitung 13 für Reaktanden des ersten Reaktors 23. Besagte Quellen 25, 27 sind also nicht identisch. Es ist eine vierte Rohrleitung in Form einer Zuführleitung 13 vorgesehen, welche in die erste Rohrleitung 11 mündet und wobei die Reaktanden durch die vierte Rohrleitung 13 über einen Abschnitt der ersten Rohrleitung durch den Wärmetauscher 5 in die dritte Rohrleitung 15 überführt werden können. Es sind Absperrventile 9', 11' der ersten Rohrleitung vorgesehen, welche den ersten Reaktor 21 und die erste Quelle 25 der Reaktanden von der dritten und vierten Rohrleitung 13, 15 trennt. Die dritte und vierte Rohrleitung 13, 15 weisen ebenfalls Ventile auf, um den zweiten Reaktor 23 und eine zweite Quelle 27 von einem geschlossenen Durchlauf, umfassend die erste Quelle 25, den ersten Wärmetauscher 5 und den ersten Reaktor 21 abtrennen zu können. Ferner sind jeweils Lochblenden 9", 11", 13", 15" vorgesehen, um den Durchfluss regulieren zu können. Ein Brenner 17 ist auch wiedergegeben.

Bei Verwendung der Industrieanlage nach Figur 1 erfolgt der Transfer des mindestens einen ersten und/oder zweiten Reaktanden zum ersten und zweiten Reaktor 21, 23 vorzugsweise nacheinander, wobei ein Transfer des ersten Reaktanden von der ersten Quelle 25 durch den ersten Wärmetauscher 5 hindurch zum ersten Reaktor 21 erfolgt und danach ein Transfer des zweiten Reaktanden von der zweiten Quelle 27 durch den ersten Wärmetauscher 5 hindurch zum zweiten Reaktor 23 erfolgt.

Figur 2 zeigt eine zweite Ausführungsform der Industrieanlage 101 umfassend einen ersten Reaktor 121 und einen zweiten Reaktor 123 sowie einen Anfahrofen 103 mit mindestens einem ersten Wärmetauscher 105 und einem zweiten Wärmetauscher 107, wobei der erste Reaktor 121 für einen höheren internen Druck ausgelegt und eingerichtet ist als der zweite Reaktor 123, wobei besagter Anfahrofen 103 über ein Rohrleitungssystem 109, 111, 113, 115 für mindestens einen Reaktanden sowohl mit dem ersten als auch mit dem zweiten Reaktor 121, 123 verbunden ist. Das Rohrleitungssystem verfügt über eine erste Rohrleitung 113, 115 und über eine zweite Rohrleitung 111, 109, wobei der erste Wärmetauscher 105 über die erste Rohrleitung 109, 111 mit dem ersten Reaktor 121 verbunden ist und der zweite Wärmetauscher 107 über die zweite Rohrleitung 113, 115 mit dem zweiten Reaktor 123 verbunden ist. Es ist dabei vorgesehen, dass die erste Rohrleitung 109, 111 und die zweite Rohrleitung 113, 115 voneinander beabstandet und voneinander getrennt sind und nicht miteinander über weitere Rohrleitungen verbunden sind. Es hat sich überraschend gezeigt, dass beide Wärmetauscher 105, 107 des einen Anfahrofens zusammen erwärmt werden können, insbesondere unter Nutzung derselben Brenner. Auch sind getrennte erste und zweite Quellen 125, 127 vorgesehen, welche über Ventile 113', 115', 109', 111' von den entsprechenden Reaktoren 121, 123 entkoppelt werden können. Ein Brenner 117 ist auch wiedergegeben.

Bei Verwendung der Industrieanlage nach Figur 2 erfolgt der Transfer vorzugsweise simultan, wobei der erste Reaktand von der ersten Quelle 125 durch den ersten Wärmetauscher 105 hindurch in den ersten Reaktor 121 geführt wird und der zweite Reaktand von der zweiten Quelle 127 durch einen zweiten Wärmetauscher 107 hindurch in den zweiten Reaktor 123 geführt wird.

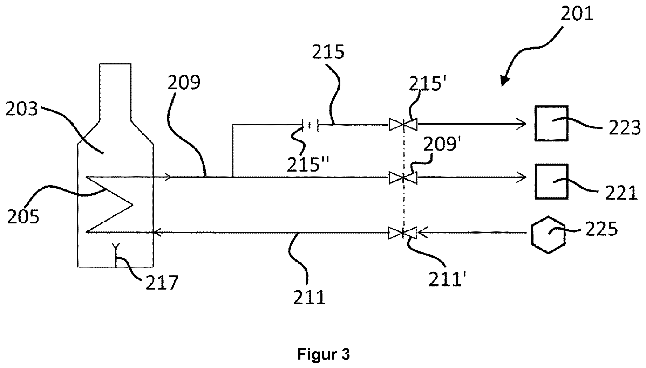

Figur 3 zeigt eine dritte Ausführungsform der Industrieanlage 201 umfassend einen ersten Reaktor 221 und einen zweiten Reaktor 223 sowie einen Anfahrofen 203 mit mindestens einem ersten Wärmetauscher 205, wobei der erste Reaktor 221 für einen höheren internen Druck ausgelegt und eingerichtet ist als der zweite Reaktor 223, wobei besagter Anfahrofen 203 über ein Rohrleitungssystem 209, 211, 215 für mindestens einen Reaktanden sowohl mit dem ersten als auch mit dem zweiten Reaktor 221, 223 verbunden ist. Der erste Wärmetauscher 205 ist über die erste Rohrleitung 211, 209 mit dem ersten Reaktor 221 verbunden, wobei eine dritte Rohrleitung 215 aus der ersten Rohrleitung 209 abzweigt, wobei der erste Wärmetauscher 205 über die dritte Rohrleitung 215 mit dem zweiten Reaktor 223 verbunden ist. Hierbei zweigt die dritte Rohrleitung 215 ab, nachdem die erste Rohrleitung 209, 211 durch den Anfahrofen 203 geführt wurde. Es kann ein Simultanbetrieb erfolgen, wobei die dritte Rohrleitung 215 über die erste Rohrleitung 209, 211 mit Reaktanden versorgt wird, d.h. eine vierte Rohrleitung ist nicht vorgesehen und die Quelle 225der Reaktanden für den ersten und zweiten Reaktor 221, 223 ist identisch. Ein Ventil 215' ist vorgesehen, um den zweiten Reaktor 223 von der ersten Rohrleitung 209, 211 abkoppeln zu können. Weitere Ventile 209', 211' ermöglichen es, den ersten Reaktor 221 und oder die erste Quelle 225 abzukoppeln. Besonders wichtig ist in dieser Ausgestaltung die Lochblende 215", welche den Durchfluss mit reguliert. Ein Brenner 217 ist auch wiedergegeben.

Bei Verwendung der Industrieanlage nach Figur 3 erfolgt der Transfer vorzugsweise nacheinander, wobei der erste Reaktand von der Quelle 225 durch den ersten Wärmetauscher 205 hindurch in den ersten Reaktor 221 geführt wird und ein Anteil des ersten Reaktanden nach Erwärmung durch den ersten Wärmetauscher 205 in den zweiten Reaktor 223 umgeleitet wird.

Die in der voranstehenden Beschreibung, den Ansprüchen sowie den Zeichnungen offenbarten Merkmale der Erfindung können sowohl einzeln als auch in jeder beliebigen Kombination für die Verwirklichung der Erfindung vorteilhaft sein.

## Patentansprüche

1. Ammoniakanlage, umfassend einen ersten Reaktor (21, 121, 221) für eine erste Ammoniaksynthese und einen zweiten Reaktor (23, 123, 223) für eine zweite Ammoniaksynthese sowie einen Anfahrofen (3, 103, 203) mit mindestens einem ersten Wärmetauscher,
wobei besagter Anfahrofen (3, 103, 203) über ein Rohrleitungssystem (9, 11, 13, 15; 109, 111, 113, 115; 209, 211, 215) für die Reaktanden einer ersten Ammoniaksynthese mit dem ersten Reaktor verbunden ist und über ein Rohrleitungssystem für die Reaktanden einer zweiten Ammoniaksynthese mit dem zweiten Reaktor (21, 23; 121, 123; 221, 223) verbunden ist, **dadurch gekennzeichnet, dass** der Anfahrofen im Strömungsweg der Rohrleitungssysteme der beiden Reaktoren so angeordnet ist, dass er wahlweise nur mit ersten Rohrleitungen des ersten Reaktors oder nur mit zweiten Rohrleitungen des zweiten Reaktors verbindbar ist.

2. Ammoniakanlage nach Anspruch 1, **dadurch gekennzeichnet, dass** diese wenigstens einen Kompressor mit wenigstens zwei Kompressorstufen umfasst, wobei der Kompressor im Strömungsweg des Rohrleitungssystems so angeordnet ist, dass eine Erhöhung des Prozessdrucks in zweiten Rohrleitungen des zweiten Reaktors bei Beibehaltung des Prozessdrucks in ersten Rohrleitungen des ersten Reaktors möglich ist.

3. Ammoniakanlage nach Anspruch 1 oder 2, **dadurch gekennzeichnet, dass** der mindestens eine erste Wärmetauscher (5, 105, 205) mit dem ersten und mit dem zweiten Reaktor (21, 23; 121, 123; 221, 223) über das Rohrleitungssystem (9, 11, 13, 15; 109, 111, 113, 115; 209, 211, 215) verbunden ist, wobei Absperrventile (9', 11', 13', 15'; 109', 111', 113', 115'; 209', 211', 215') vorhanden sind, um zwischen dem ersten und zweiten Reaktor (21, 23; 121, 123; 221, 223) hin und her zu schalten.

4. Ammoniakanlage nach einem der vorhergehenden Ansprüche, **dadurch gekennzeichnet, dass** der Anfahrofen (103) auch einen zweiten Wärmetauscher (107) umfasst, wobei das Rohrleitungssystem über erste und zweite Rohrleitungen (113, 115, 111, 109) verfügt und wobei der erste Wärmetauscher (105) über die erste Rohrleitung (109, 111) mit dem ersten Reaktor (121) verbunden ist und der zweite Wärmetauscher über die zweite Rohrleitung (113, 115) mit dem zweiten Reaktor (123) verbunden ist.

5. Ammoniakanlage nach einem der vorangehenden Ansprüche, **dadurch gekennzeichnet, dass** der erste Wärmetauscher (205) über die erste Rohrleitung mit dem ersten Reaktor (221) verbunden ist, wobei eine dritte Rohrleitung (215) aus der ersten Rohrleitung abzweigt, wobei der erste Wärmetauscher (205) über die dritte Rohrleitung (215) mit dem zweiten Reaktor (223) verbunden ist.

6. Ammoniakanlage nach Anspruch 5, **dadurch gekennzeichnet, dass** mindestens ein erstes Absperrventil in der ersten Rohrleitung (209) vorhanden ist, um den ersten Reaktor (221) von der dritten Rohrleitung (215) und dem ersten Wärmetauscher (205) zu entkoppeln,
wobei mindestens ein zweites Absperrventil in der dritten Rohrleitung vorhanden ist, um die erste Rohrleitung von dem zweiten Reaktor (23, 123, 223) zu entkoppeln.

7. Verfahren zur Herstellung von Ammoniak, insbesondere in einer Ammoniakanlage nach einem der vorangehenden Ansprüche, wobei das Verfahren folgende Schritte umfasst
a. Erwärmen eines Synthesegases für eine erste Ammoniaksynthese in einem ersten Reaktor mit einem Anfahrofen (3, 103, 203) und
b. Transfer des erwärmten Synthesegases zu diesem ersten Reaktor (21, 121, 221) zum Zwecke der Initiierung der chemischen Reaktion;
c. Erwärmen eines Synthesegases für eine zweite Ammoniaksynthese in einem zweiten Reaktor (23, 123, 223) mit dem gleichen Anfahrofen (3, 103, 203) und
d. Transfer des erwärmten Synthesegases zu diesem zweiten Reaktor (23, 123, 223) zum Zwecke der Initiierung der chemischen Reaktion, wobei im ersten Reaktor (21, 121, 221) eine Hochdrucksynthese von Ammoniak und im zweiten Reaktor (23, 123, 223) eine Niederdrucksynthese von Ammoniak bei einem Prozessdruck erfolgt, welcher niedriger ist als der Prozessdruck im ersten Reaktor.

8. Verfahren nach Anspruch 7, **dadurch gekennzeichnet, dass** der Anfahrofen (103) wenigstens zwei voneinander unabhängige Wärmetauscher (105, 107) umfasst, wobei ein erstes Synthesegas im ersten Wärmetauscher (105) und/oder bei Einleitung in den ersten Reaktor (21, 121, 221) einen höheren Partialdruck aufweist als ein zweites Synthesegas im zweiten Wärmetauscher (107) und/oder bei Einleitung in den zweiten Reaktor (23, 123, 223).

9. Verfahren nach Anspruch 7, **dadurch gekennzeichnet, dass** der Transfer eines ersten Synthesegases zum ersten Reaktor (21) und der Transfer eines zweiten Synthesegases zum zweiten Reaktor (23) nacheinander erfolgen, wobei ein Transfer des ersten Synthesegases durch den ersten Wärmetauscher (5) hindurch zum ersten Reaktor (21) erfolgt und danach ein Transfer des zweiten Synthesegases durch den ersten Wärmetauscher (5) hindurch zum zweiten Reaktor (23) erfolgt.

10. Verfahren nach Anspruch 7, **dadurch gekennzeichnet, dass** der Transfer simultan erfolgt, wobei ein Transfer des ersten Synthesegases durch den ersten Wärmetauscher (205) hindurch zum ersten Reaktor (221) erfolgt und ein Anteil des ersten Synthesegases nach Erwärmung durch den ersten Wärmetauscher (205) in den zweiten Reaktor (223) umgeleitet wird.

11. Verfahren nach Anspruch 8, **dadurch gekennzeichnet, dass** der Transfer simultan oder nacheinander erfolgt, wobei der erste Reaktand durch den ersten Wärmetauscher (105) hindurch in den ersten Reaktor (121) geführt wird und der zweite Reaktand durch den zweiten Wärmetauscher (107) hindurch in den zweiten Reaktor (123) geführt wird, wobei der erste und zweite Wärmetauscher in dem einen Anfahrofen (103) umfasst sind.

12. Verfahren nach einem der Ansprüche 7 bis 11, **dadurch gekennzeichnet, dass** der Anfahrofen (3, 103, 203) Brenner aufweist, die mit demselben Gas betrieben werden, welches auch als Reformergas zur Herstellung von Wasserstoff für die Ammoniaksynthese verwendet wird und/oder dass der Anfahrofen (3, 103, 203) unter atmosphärischem Druck den ersten Wärmetauscher (5, 105, 205) erwärmt.

## Claims

1. An ammonia plant comprising a first reactor (21, 121, 221) for a first ammonia synthesis and a second reactor (23, 123, 223) for a second ammonia synthesis and also a start-up oven (3, 103, 203) having at least one first heat exchanger,
wherein said start-up oven (3, 103, 203) is connected to the first reactor via a piping system (9, 11, 13, 15; 109, 111, 113, 115; 209, 211, 215) for the reactants of a first ammonia synthesis and connected to the second reactor (21, 23; 121, 123; 221, 223) via a piping system for the reactants of a second ammonia synthesis, **characterized in that** the start-up oven is arranged in the flow path of the piping systems of the two reactors such that it may be connected only to the first pipes of the first reactor or only to the second pipes of the second reactor as desired.

2. The ammonia plant as claimed in claim 1, **characterized in that** it comprises at least one compressor having at least two compressor stages, wherein the compressor is arranged in the flow path of the piping system such that it is possible to achieve an elevation of the process pressure in the second pipes of the second reactor while maintaining the process pressure in the first pipes of the first reactor.

3. The ammonia plant as claimed in claim 1 or 2, **characterized in that**
the at least one first heat exchanger (5, 105, 205) is connected to the first and to the second reactor (21, 23; 121, 123; 221, 223) via the piping system (9, 11, 13, 15; 109, 111, 113, 115; 209, 211, 215), wherein shutoff valves (9', 11', 13', 15'; 109', 111', 113', 115'; 209', 211', 215') are present to switch back and forth between the first and second reactor (21, 23; 121, 123; 221, 223).

4. The ammonia plant as claimed in any of the preceding claims, **characterized in that** the start-up oven (103) also comprises a second heat exchanger (107), wherein the piping system has first and second pipes (113, 115, 111, 109) and wherein the first heat exchanger (105) is connected to the first reactor (121) via the first pipe (109, 111) and the second heat exchanger is connected to the second reactor (123) via the second pipe (113, 115).

5. The ammonia plant as claimed in any of the preceding claims, **characterized in that** the first heat exchanger (205) is connected to the first reactor (221) via the first pipe, wherein a third pipe (215) branches off from the first pipe, wherein the first heat exchanger (205) is connected to the second reactor (223) via the third pipe (215).

6. The ammonia plant as claimed in claim 5, **characterized in that**
at least one first shutoff valve is present in the first pipe (209) to decouple the first reactor (221) from the third pipe (215) and the first heat exchanger (205),
wherein at least one second shutoff valve is present in the third pipe to decouple the first pipe from the second reactor (23, 123, 223).

7. A process for producing ammonia, in particular in an ammonia plant as claimed in any of the preceding claims, wherein the process comprises the steps of
a. heating a synthesis gas for a first ammonia synthesis in a first reactor with a start-up oven (3, 103, 203) and
b. transferring the heated synthesis gas to this first reactor (21, 121, 221) for the purpose of initiating the chemical reaction;
c. heating a synthesis gas for a second ammonia synthesis in a second reactor (23, 123, 223) with the same start-up oven (3, 103, 203) and
d. transferring the heated synthesis gas to this second reactor (23, 123, 223) for the purpose of initiating the chemical reaction, wherein a high-pressure synthesis of ammonia is carried out in the first reactor (21, 121, 221) and a low-pressure synthesis of ammonia is carried out in the second reactor (23, 123, 223) at a process pressure which is lower than the process pressure in the first reactor.

8. The process as claimed in claim 7, **characterized in that** the start-up oven (103) comprises at least two heat exchangers (105, 107) which are independent of one another, wherein a first synthesis gas has a higher partial pressure in the first heat exchanger (105) and/or upon introduction into the first reactor (21, 121, 221) than a second synthesis gas in the second heat exchanger (107) and/or upon introduction into the second reactor (23, 123, 223).

9. The process as claimed in claim 7, **characterized in that**
the transfer of a first synthesis gas to the first reactor (21) and the transfer of a second synthesis gas to the second reactor (23) are carried out successively, wherein a transfer of the first synthesis gas through the first heat exchanger (5) and into the first reactor (21) is followed by a transfer of the second synthesis gas through the first heat exchanger (5) and into the second reactor (23).

10. The process as claimed in claim 7, **characterized in that**
the transfer is carried out simultaneously, wherein a transfer of the first synthesis gas through the first heat exchanger (205) and into the first reactor (221) is carried out and a proportion of the first synthesis gas is diverted into the second reactor (223) after heating by the first heat exchanger (205).

11. The process as claimed in claim 8, **characterized in that**
the transfer is carried out simultaneously or successively, wherein the first reactant is passed through the first heat exchanger (105) and into the first reactor (121) and the second reactant is passed through the second heat exchanger (107) and into the second reactor (123), wherein the first and second heat exchanger are comprised in the one start-up oven (103).

12. The process as claimed in any of claims 7 to 11, **characterized in that** the start-up oven (3, 103, 203) has burners operated with the same gas also used as reformer gas for producing hydrogen for the ammonia synthesis and/or that the start-up oven (3, 103, 203) heats the first heat exchanger (5, 105, 205) under atmospheric pressure.

## Revendications

1. Installation de production d'ammoniac comprenant un premier réacteur (21, 121, 221) destiné à une première synthèse d'ammoniac et un deuxième réacteur (23, 123, 223) destiné une deuxième synthèse d'ammoniac et un four de démarrage (3, 103, 203) comprenant au moins un premier échangeur de chaleur,
ledit four de démarrage (3, 103, 203) étant relié au premier réacteur par le biais d'un système de canalisations (9, 11, 13, 15 ; 109, 111, 113, 115 ; 209, 211, 215) destiné aux réactifs d'une première synthèse d'ammoniac et étant relié au deuxième réacteur (21, 23 ; 121, 123 ; 221, 223) par le biais d'un système de canalisations destiné aux réactifs d'une deuxième synthèse d'ammoniac, **caractérisé en ce que** le four de démarrage est disposé dans le chemin d'écoulement des systèmes de canalisations des deux réacteurs de sorte qu'il puisse être relié de manière sélective uniquement aux premières canalisations du premier réacteur ou uniquement aux deuxièmes canalisations du deuxième réacteur.

2. Installation de production d'ammoniac selon la revendication 1, **caractérisée en ce qu'**elle comprend au moins un compresseur pourvu d'au moins deux étages de compresseur, le compresseur étant disposé dans le chemin d'écoulement du système de canalisations de sorte qu'une augmentation de la pression de processus dans des deuxièmes canalisation du deuxième réacteur est possible lorsque la pression de processus est maintenue dans les premières canalisation du premier réacteur.

3. Installation de production d'ammoniac selon la revendication 1 ou 2, **caractérisée en ce que** l'au moins un premier échangeur de chaleur (5, 105, 205) est relié au premier et au deuxième réacteur (21, 23 ; 121, 123 ; 221, 223) par le biais du système de canalisations (9, 11, 13, 15 ; 109, 111, 113, 115 ; 209, 211, 215), des vannes d'arrêt (9', 11', 13', 15' ; 109', 111', 113', 115' ; 209', 211, 215') étant prévues pour commutateur alternativement entre les premier et deuxième réacteurs (21, 23 ; 121, 123 ; 221, 223).

4. Installation de production d'ammoniac selon l'une des revendications précédentes, **caractérisée en ce que** le four de démarrage (103) comprend également un deuxième échangeur de chaleur (107), le système de canalisations comportant des première et deuxième canalisations (113, 115, 111, 109) et le premier échangeur de chaleur (105) étant relié au premier réacteur (121) par le biais de la première canalisation (109, 111) et le deuxième échangeur de chaleur étant relié au deuxième réacteur (123) par le biais de la deuxième canalisation (113, 115).

5. Installation de production d'ammoniac selon l'une des revendications précédentes, **caractérisée en ce que** le premier échangeur de chaleur (205) est relié au premier réacteur (221) par le biais de la première canalisation, une troisième canalisation (215) dérivant de la première canalisation, le premier échangeur de chaleur (205) étant relié au deuxième réacteur (223) par le biais de la troisième canalisation (215).

6. Installation de production d'ammoniac selon la revendication 5, **caractérisée en ce qu'**au moins une première vanne d'arrêt est prévue dans la première canalisation (209) pour désaccoupler le premier réacteur (221) de la troisième canalisation (215) et du premier échangeur de chaleur (205), au moins une deuxième vanne d'arrêt étant prévue dans la troisième canalisation pour désaccoupler la première canalisation du deuxième réacteur (23, 123, 223).

7. Procédé de production d'ammoniac, notamment dans une installation de production d'ammoniac selon l'une des revendications précédentes, le procédé comprenant les étapes suivantes :
a. chauffer un gaz de synthèse destiné à une première synthèse d'ammoniac dans un premier réacteur à l'aide d'un four de démarrage (3, 103, 203) et
b. transférer le gaz de synthèse chauffé vers ledit premier réacteur (21, 121, 221) afin d'amorcer la réaction chimique ;
c. chauffer un gaz de synthèse destiné à une deuxième synthèse d'ammoniac dans un deuxième réacteur (23, 123, 223) à l'aide du même four de démarrage (3, 103, 203) et
d. transférer le gaz de synthèse chauffé dans ledit deuxième réacteur (23, 123, 223) afin d'amorcer la réaction chimique, une synthèse d'ammoniac à haute pression étant effectuée dans le premier réacteur (21, 121, 221) et une synthèse d'ammoniac à basse pression étant effectuée dans le deuxième réacteur (23, 123, 223) à une pression de processus qui est inférieure à la pression de processus dans le premier réacteur.

8. Procédé selon la revendication 7, **caractérisé en ce que** le four de démarrage (103) comporte au moins deux échangeurs de chaleur (105, 107) indépendants l'un de l'autre, un premier gaz de synthèse ayant dans le premier échangeur de chaleur (105), et/ou lorsqu'il est introduit dans le premier réacteur (21, 121, 221), une pression partielle supérieure à celle d'un deuxième gaz de synthèse dans le deuxième échangeur de chaleur (107) et/ou lorsqu'il est introduit dans le deuxième réacteur (23, 123, 223).

9. Procédé selon la revendication 7, **caractérisé en ce que** le transfert d'un premier gaz de synthèse vers le premier réacteur (21) et le transfert d'un deuxième gaz de synthèse vers le deuxième réacteur (23) sont effectués l'un après l'autre, le premier gaz de synthèse étant transféré par le biais du premier échangeur de chaleur (5) vers le premier réacteur (21) puis le deuxième gaz de synthèse étant transféré par le biais du premier échangeur de chaleur (5) vers le deuxième réacteur (23).

10. Procédé selon la revendication 7, **caractérisé en ce que** le transfert est effectué simultanément, un transfert du premier gaz de synthèse étant effectué par le biais du premier échangeur de chaleur (205) vers le premier réacteur (221) et une partie du premier gaz de synthèse étant détournée vers le deuxième réacteur (223) après avoir été chauffée par le premier échangeur de chaleur (205).

11. Procédé selon la revendication 8, **caractérisé en ce que** le transfert est effectué simultanément ou séquentiellement, le premier réactif étant guidé à travers le premier échangeur de chaleur (105) jusque dans le premier réacteur (121) et le deuxième réactif étant guidé à travers le deuxième échangeur de chaleur (107) jusque dans le deuxième réacteur (123), les premier et deuxième échangeurs de chaleur étant inclus dans le premier four de démarrage (103).

12. Procédé selon l'une des revendications 7 à 11, **caractérisé en ce que** le four de démarrage (3, 103, 203) comporte des brûleurs qui fonctionnent avec le même gaz qui est également utilisé comme gaz de reformage dans la production d'hydrogène pour la synthèse d'ammoniac et/ou **en ce que** le four de démarrage (3, 103, 203) chauffe le premier échangeur de chaleur (5, 105, 205) au-dessous de la pression atmosphérique.
